(19) Europäisches Patentamt
European Patent Office
Office européen des brevets

(11) EP 3 875 680 B1

(12) **EUROPEAN PATENT SPECIFICATION**

(45) Date of publication and mention of the grant of the patent:
**01.04.2026 Bulletin 2026/14**

(21) Application number: **21156903.3**

(22) Date of filing: **12.02.2021**

(51) International Patent Classification (IPC):
***D21F 3/02*** *(2006.01)* ***C08G 18/44*** *(2006.01)*

(52) Cooperative Patent Classification (CPC):
(C-Sets available)
**D21F 3/0227; C08G 18/10; C08G 18/12; C08G 18/44; C08G 18/757** (Cont.)

(54) **SHOE PRESS BELT AND METHOD FOR PRODUCING A SHOE PRESS BELT**

SCHUHPRESSBAND UND VERFAHREN ZUR HERSTELLUNG EINES SCHUHPRESSBANDES

COURROIE DE PRESSE À SABOT ET PROCÉDÉ DE FABRICATION D’UNE COURROIE DE PRESSE À SABOT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2020 JP 2020033892**

(43) Date of publication of application:
**08.09.2021 Bulletin 2021/36**

(73) Proprietor: **Ichikawa Co., Ltd.**
**Tokyo 113-8442 (JP)**

(72) Inventors:
- **TAKAMORI, Yuya**
  **Tokyo 113-8442 (JP)**
- **MORINAGA, Manami**
  **Tokyo 113-8442 (JP)**

(74) Representative: **Dr. Gassner & Partner mbB**
**Wetterkreuz 3**
**91058 Erlangen (DE)**

(56) References cited:
**EP-A1- 2 716 675**
**EP-A1- 3 282 052**
**WO-A1-2013/013891**
**WO-A1-2013/122812**
**WO-A1-2014/038565**
**WO-A1-2020/057800**
**WO-A2-2011/001695**
**DE-A1- 102011 079 893**

EP 3 875 680 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08G 18/10, C08G 18/3206;**
**C08G 18/12, C08G 18/3206**

## Description

CROSS REFERENCE TO RELATED APPLICATIONS

This application is based upon and claims benefit of priority from Japanese Patent Application No. 2020-033892, filed on February 28, 2020.

BACKGROUND

[Technical Field]

The present invention relates to a shoe press belt and a method for producing a shoe press belt.

[Background Art]

Papermaking machines for removing moisture from a source material of paper are generally equipped with a wire part, a press part, and a dryer part. These parts are arranged in the order of the wire part, the press part, and the dryer part in a wet paper web transfer direction.

A wet paper web is transferred and moisture thereof is removed while the wet paper web is being successively passed through papermaking devices provided in the wire part, the press part, and the dryer part, and the wet paper web is finally dried in the dryer part. In those parts, the papermaking devices corresponding to a function of dehydrating a wet paper web (wire part), a function of squeezing water (press part), and a function of drying the wet paper web (dryer part) are used.

The press part generally comprises one or more press devices arranged in series in the wet paper web transfer direction. An endless felt is disposed in each press device, or an endless felt formed by connecting an ended felt on a papermaking machine is disposed therein. In addition, each press device has a roll press mechanism made up of a pair of rolls facing each other or a shoe press mechanism in which an endless shoe press belt is interposed between a recessed shoe facing a roll and the roll. The felt, on which the wet paper web is placed, is passed through the roll press mechanism or the shoe press mechanism and pressurized while moving the felt in the wet paper web transfer direction, and thereby moisture of the wet paper web is continuously squeezed from the wet paper web by being absorbed into the felt or by passing moisture through the felt to discharge the moisture to the outside.

In the shoe press belt, a reinforcement material is embedded in resin and the resin constitutes an outer circumferential layer, which is brought into contact with the felt, and an inner circumferential layer, which is in contact with the shoe. In addition, the shoe press belt repeatedly travels between the pressurized roll and the shoe, and therefore the resin of the shoe press belt is required to have an excellent durability.

JP 2016-199813 A proposes a shoe-pressing belt composed of a polyurethane and a reinforcing substrate embedded in the polyurethane such that the polyurethane and the reinforcing substrate are integrated, for the purpose of, in a shoe press belt having a drain, preventing the collapse or impairment of a land or even occurrences of cracks in the land that constitutes the drain, wherein the polyurethane that constitutes at least an outer circumferential surface of the shoe-pressing belt is a thermosetting polyurethane obtained by curing an urethane prepolymer with a curing agent, and wherein the urethane prepolymer comprises a first urethane prepolymer obtained by a reaction of a polyol ingredient containing a given linear aliphatic polycarbonate diol with an aromatic diisocyanate.

DE 10 2011 079893 discloses a shoe press belt for use in a papermaking machine, comprising at least one resin layer made of a polyurethane formed by curing an urethane prepolymer being a reaction product of 1,6-hexamethylene diisocyanate and a polyol which is then cured. The polyol can be a polycarbonate diol comprising two independently selected aliphatic, alicyclic, aromatic or heterocyclic groups.

SUMMARY

[Technical Problem]

A shoe press belt provided with a polyurethane layer having linear aliphatic polycarbonate diol as a component of urethane prepolymer is excellent in its strength. On the other hand, the present inventors found that, when linear aliphatic polycarbonate diol was used as a component of an urethane prepolymer, the resulting shoe press belt had variation in strength among the parts of it. The presence of variation in strength among the parts of a shoe press belt may cause a damage or deterioration to the shoe press belt starting from the part with weak strength, which would as a result cause difficulty in improving durability of the shoe press belt.

Accordingly, an object of the present invention is to provide a shoe press belt which has an excellent strength

while the variation in strength among its parts being suppressed, and to provide a method for producing such a shoe press belt.

[Solution to Problem]

The present inventors have made intensive studies in order to achieve the aforementioned object and as a result found that, in a shoe press belt, by using an urethane prepolymer having an isocyanate group which is obtained by reacting certain polycarbonate diol with an aliphatic polyisocyanate, the strength of a polyurethane layer constituting the shoe press belt could be increased while suppressing the variation in strength, and thus accomplished the present invention.

A gist of the present invention is as follows:

[1] A shoe press belt for use in a papermaking machine, comprising at least one resin layer, wherein:
the resin layer comprises a polyurethane resin formed by curing an urethane prepolymer having an isocyanate group with a curing agent having an active hydrogen group, wherein the urethane prepolymer is obtained by reacting a polyol comprising one or more polycarbonate diol(s) expressed by the following formula (1):

$$HO\text{-}A_m\text{-}B_n\text{-}R^1OH \qquad (1)$$

with an aliphatic polyisocyanate, wherein:

in the formula (1),

A and B are each differently a unit expressed by the following formula (2):

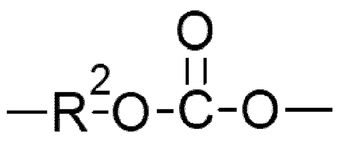

(2)

$R^1$ is a linear, branched or cyclic alkylene group having 1 or more and 20 or less of (a) carbon atom(s),
m and n are each independently an integer from 1 to 46, and

in the formula (2),
$R^2$ is a linear alkylene group having 1 or more and 20 or less of (a) carbon atom(s).

[2] The shoe press belt according to [1], wherein the absolute difference between the number of carbon atoms contained in A and the number of carbon atoms contained in B in the formula (1) is 1 or more and 8 or less.

[3] The shoe press belt according to [1] or [2], wherein the number of carbon atoms of $R^2$ in A is 2 or more and 11 or less, and the number of carbon atoms of $R^2$ in B is 3 or more and 19 or less.

[4] The shoe press belt according to any one of [1] to [3], wherein

$R^2$ in A is n-propylene group, and $R^2$ in B is n-butylene group; or
$R^2$ in A is n-butylene group, and $R^2$ in B is n-hexylene group or n-decylene group; or
$R^2$ in A is n-pentylene group, and $R^2$ in B is n-hexylene group; or
$R^2$ in A is n-hexylene group, and $R^2$ in B is n-undecylene group or n-dodecylene group; or
$R^2$ in A is n-undecylene group, and $R^2$ in B is n-dodecylene group.

[5] The shoe press belt according to any one of [1] to [4], wherein the aliphatic polyisocyanate comprises alicyclic polyisocyanate compound.

[6] The shoe press belt according to any one of [1] to [5], wherein the aliphatic polyisocyanate comprises 1,4-bis(isocyanatemethyl)cyclohexane.

[7] The shoe press belt according to any one of [1] to [6], comprising as the resin layer a layer which constitutes an outer

circumferential surface of the shoe press belt and comprises the polyurethane resin.

[8] The shoe press belt according to any one of [1] to [7], comprising as the resin layer a layer which constitutes the inner circumferential surface of the shoe press belt and comprises the polyurethane resin.

[9] A method for producing a shoe press belt for use in a papermaking machine, the method comprising a step of forming a resin layer by curing an urethane prepolymer having an isocyanate group with a curing agent having an active hydrogen group, wherein the urethane prepolymer is obtained by reacting a polyol comprising one or more polycarbonate diol(s) expressed by the following formula (1):

$$HO\text{-}A_m\text{-}B_n\text{-}R^1OH \qquad (1)$$

with an aliphatic polyisocyanate, wherein:

in the formula (1),

A and B are each differently a unit expressed by the following formula (2):

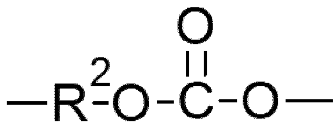

(2)

$R^1$ is a linear, branched or cyclic alkylene group having 1 or more and 20 or less of (a) carbon atom(s), m and n are each independently an integer from 1 to 46, and

in the formula (2),
$R^2$ is a linear alkylene group having 1 or more and 20 or less of (a) carbon atom(s).

[Advantageous Effects of Invention]

The above-mentioned configuration makes it possible to provide a shoe press belt having an excellent strength while suppressing the variation in strength among its parts, and to provide a method for producing such shoe press belt.

BRIEF DESCRIPTION OF THE DRAWINGS

FIG. 1 is a cross-sectional view in a cross machine direction showing a shoe press belt according to an embodiment of the present invention.
FIG. 2 is a cross-sectional view in a cross machine direction showing a shoe press belt according to another embodiment of the present invention.
FIG. 3 is a schematic diagram for illustrating a preferred embodiment of a method of producing a shoe press belt according to the present invention.
FIG. 4 is a schematic diagram for illustrating a preferred embodiment of a method of producing a shoe press belt according to the present invention.
FIG. 5 is a schematic diagram for illustrating a preferred embodiment of a method of producing a shoe press belt according to the present invention.

DESCRIPTION OF THE EMBODIMENTS

Hereinafter, referring to the appended drawings, preferred embodiments of a shoe press belt and a method for producing a shoe press belt according to the present invention will be described in detail.

<1. Shoe press belt>

First, a shoe press belt according to a preferred embodiment of the present invention will be described.
FIG. 1 is a cross-sectional view in a cross machine direction showing an example of a shoe press belt according to

a preferred embodiment of the present invention. Note that, in the drawing, each member has been emphasized in size as appropriate for ease of illustration and thus does not indicate the actual proportion and size of each member. Herein, the aforementioned cross machine direction may be referred to as "CMD", and the machine direction may be referred to as "MD".

A shoe press belt 1 shown in FIG. 1 is used for transferring a wet paper web in cooperation with a felt in a press part, more specifically in a shoe press mechanism, of a papermaking machine and squeezing moisture from the wet paper web. The shoe press belt 1 forms an endless band-shaped body. That is, the shoe press belt 1 is an annular belt. In addition, a circumferential direction of the shoe press belt 1 is generally disposed along a machine direction (MD) of the papermaking machine.

The shoe press belt 1 shown in FIG. 1 comprises a reinforcing fibrous substrate layer 10, a first resin layer 20 provided on one principal surface on an outer surface side of the reinforcing fibrous substrate layer 10, and a second resin layer 30 provided on the other principal surface on an inner surface side of the reinforcing fibrous substrate layer 10, and the shoe press belt 1 is formed by laminating those layers.

The reinforcing fibrous substrate layer 10 comprises a reinforcing fibrous substrate 11 and resin 13. The resin 13 exists in the reinforcing fibrous substrate layer 10 so as to fill gaps between fibers in the reinforcing fibrous substrate 11. That is, the reinforcing fibrous substrate 11 is impregnated with a part of the resin 13, and the reinforcing fibrous substrate 11 is embedded in the resin 13.

There are no particular limitations with regard to the reinforcing fibrous substrate 11. However, for example, fabrics woven by a weaving machine and the like from warps and weft yarns are commonly used. Moreover, it is also possible to use a grid-like web material of superimposed rows of warps and weft yarns without weaving. Alternatively, two or more of woven fabrics and grid-like web materials, etc. can be used in combination.

There are no particular limitations with regard to the fineness of the fibers constituting the reinforcing fibrous substrate 11. However, for example, the fineness can be set to 300 to 10,000 dtex and can preferably be set to 500 to 6,000 dtex.

Moreover, the fineness of the fibers constituting the reinforcing fibrous substrate 11 may be different depending on a part in which the fibers are used. For example, the fineness of the warps and weft yarns in the reinforcing fibrous substrate 11 may be different.

As a material of the reinforcing fibrous substrate 11, it is possible to use one or a combination of two or more of polyesters (polyethylene terephthalate, polybutylene terephthalate, and the like), aliphatic polyamides (polyamide 6, polyamide 11, polyamide 12, polyamide 612, and the like), aromatic polyamides (aramid), polyvinylidene fluoride, polypropylene, polyether ether ketone, polytetrafluoroethylene, polyethylene, wool, cotton, metals, and the like.

The resin 13 will be described hereinafter.

The first resin layer 20 is a resin layer provided on one principal surface on the outer surface side of the reinforcing fibrous substrate layer 10, and is composed of resin 23. The first resin layer 20 constitutes the outer circumferential surface 21. When the shoe press belt 1 is used, an wet paper web is supported and carried with a felt on the outer circumferential surface 21.

The second resin layer 30 is a resin layer provided on the other principal surface on the inner surface side of the reinforcing fibrous substrate layer 10, and is composed of resin 33. The second resin layer 30 constitutes the inner circumferential surface 31. When the shoe press belt 1 is used, the inner circumferential surface 31 is disposed such that it is in contact with a shoe of the shoe press mechanism (not illustrated).

Next, the resin 13 in the reinforcing fibrous substrate layer 10, the resin 23 of the first resin layer 20, and the resin 33 which constitutes the second resin layer 30 of the shoe press belt 1 are described.

In the present embodiment, at least one resin layer of the reinforcing fibrous substrate layer 10, the first resin layer 20 and the second resin layer 30 of the shoe press belt 1 comprises a polyurethane resin formed by curing an urethane prepolymer having an isocyanate group with a curing agent having an active hydrogen group, wherein the urethane prepolymer is obtained by reacting a polyol comprising one or more polycarbonate diol(s) Y expressed by the following formula (1):

$$HO\text{-}A_m\text{-}B_n\text{-}R^1OH \qquad (1)$$

with an aliphatic polyisocyanate, wherein:

in the formula (1),

A and B are each differently a unit expressed by the following formula (2):

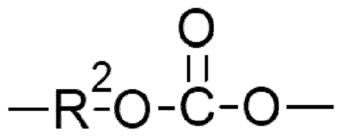 (2)

$R^1$ is a linear, branched or cyclic alkylene group having 1 or more and 20 or less of (a) carbon atom(s), m and n are each independently an integer from 1 to 46, and

in the formula (2),
$R^2$ is a linear alkylene group having 1 or more and 20 or less of (a) carbon atom(s).

Since the constitution of resin 13, resin 23 and resin 33 can be considered in similar way, hereinbelow, the resin 23 of the first resin layer 20 are described in detail as a representative. Moreover, the following description will be focused on cases in which the resin 23 comprises a polyurethane resin formed by using an urethane prepolymer having an isocyanate group which is obtained by reacting a polyol comprising polycarbonate diol(s) Y with an aliphatic polyisocyanate.

The polyurethane resin which constitutes the resin 23 is formed by using an urethane prepolymer which is obtained by reacting a polyol comprising polycarbonate diol(s) Y with an aliphatic polyisocyanate. This suppresses variation in strength in the first resin layer 20 comprising the resin 23 and at the same time improves the strength of the first resin layer 20, which in turn suppresses variation in strength among the parts of the shoe press belt 1 and at the same time improve the strength of the shoe press belt.

In the present specification, unless otherwise stated, "among the parts" refers to the relation between arbitrary parts in surface direction of a resin layer which constitutes a shoe press belt, i.e., a resin layer which is formed by one material. For instance, in the shoe press belt 1 according to the present embodiment, for each of the reinforcing fibrous substrate layer 10, the first resin layer 20 and the second resin layer 30, arbitrary parts in each resin layer in surface direction can be compared. Moreover, the variation in strength among the parts in each resin layer has multiple influences on the shoe press belt, causing the variation in strength among the parts in entire shoe press belt.

In detail, a polyurethane layer having a linear aliphatic polycarbonate diol as a component of an urethane prepolymer is excellent in its strength. On the other hand, the present inventors found that, when a linear aliphatic polycarbonate diol was used as a component of an urethane prepolymer, the resulting shoe press belt had variation in strength among the parts of it. The presence of variation in strength among the parts of the shoe press belt may cause a damage or deterioration to the shoe press belt starting from the part with weak strength, which as a result would cause difficulty in improving durability of the shoe press belt.

Accordingly, the present inventors have made intensive studies in order to elucidate the reason therefor and as a result found that, when a linear aliphatic polycarbonate diol is used to prepare an urethane prepolymer, the viscosity of both the urethane prepolymer and of the urethane composition prepared by mixing a curing agent and the urethane prepolymer would be greatly increased, making it difficult to uniformly discharge and apply the urethane composition at the time of producing a shoe press belt. In this case, it is difficult to form an uniform polyurethane layer.

On the other hand, the present inventors have found that, when a polycarbonate diol Y and an aliphatic polyisocyanate compound were used to obtain an urethane prepolymer, the increase in viscosity of the urethane prepolymer can be suppressed, and the increase in viscosity of an urethane composition obtained using this urethane prepolymer can also be suppressed, and an uniform polyurethane resin layer can be formed. It was also found that, in a resin layer thus formed, not only variation in strength among the parts in the shoe press belt is suppressed, but also the strength of the shoe press belt as a whole is improved.

In detail, a polycarbonate diol Y is a copolymer which comprises two or more different alkylene groups as monomers. When different alkylene groups are present in the principal chain of a polymer, crystallinity of the polycarbonate diol itself will be decreased as compared to a polycarbonate diol composed of single alkylene group. That is, the affinity between the polycarbonate diol molecules is relatively low. Therefore, the increase in viscosity of an urethane prepolymer and of an urethane composition prepared using the same is suppressed as compared to the case in which a polycarbonate diol composed of single alkylene group is used.

Furthermore, in the present embodiments, the urethane prepolymer is obtained by reacting a polyol compound comprising polycarbonate diol(s) Y with an aliphatic polyisocyanate. Aliphatic polyisocyanates have lower reactivity compared to aromatic isocyanates which are generally used for the manufacture of a shoe press belt. This makes the manipulation of the reaction solution easy during the production of the urethane prepolymer, making it possible to uniformly mix the reaction solution during the production of the urethane prepolymer, and resulting in relatively uniform urethane prepolymer. As a result, the increase in viscosity of the urethane prepolymer is suppressed.

The above effects of the polycarbonate diol Y and aliphatic polyisocyanate together can prevent the increase in viscosity of an urethane prepolymer, further suppress the increase in viscosity of an urethane composition obtained using

this urethane prepolymer, making it possible to form a uniform polyurethane resin layer.

Moreover, by including a polycarbonate diol Y, the strength of the formed urethane resin layer, i.e., the first resin layer 20, is improved.

In particular, the first resin layer 20 constitutes the outer circumferential surface 21 of the shoe press belt 1. In the shoe press belt 1, the outer circumferential surface 21 is a part which is prone to coming into contact/friction with a felt, etc., associated wearing of the shoe press belt 1, and damages (e.g., cracks) due to bending fatigue of the shoe press belt 1. Accordingly, the durability of the shoe press belt 1 is improved by including a polyurethane resin formed by using the aforementioned urethane prepolymer in the first resin layer 20 which constitutes the outer circumferential surface 21 of the shoe press belt 1.

In the above-described formula (1), A and B are each differently a group expressed by the formula (2). In the formula (2), $R^2$ includes, for example, methylene group, ethylene group, n-propylene group, n-butylene group, n-pentylene group, n-hexylene group, n-heptylene group and n-octylene group, n-nonylene group, n-decylene group, n-undecylene group, n-dodecylene group, n-tridecylene group, n-tetradecylene group, n-pentadecylene group, n-hexadecylene group, n-heptadecylene group, n-octadecylene group, n-nonadecylene group and n-icosylene group, and the like.

Among those mentioned above, $R^2$ in A is preferably a linear alkylene group having 2 or more and 18 or less carbon atoms, more preferably a linear alkylene group having 3 or more and 11 or less carbon atoms. Similarly, $R^2$ in B is preferably a linear alkylene group having 3 or more and 19 or less carbon atoms, more preferably a linear alkylene group having 4 or more and 12 or less carbon atoms. In general, when $R^2$ is a linear alkylene group, viscosity of the urethane prepolymer and urethane composition tends to be increased. However, in the present embodiment, the increase in viscosity of the urethane composition is also suppressed by the presence of different $R^2$ in A and B and by using polycarbonate diol Y together with aliphatic polyisocyanate. On the other hand, because $R^2$ is linear alkylene group, the strength of the resulting first resin layer 20 is further improved.

Because A and B are different, $R^2$ in A and B are naturally different. Here, the absolute difference between the number of carbon atoms contained in A and the number of carbon atoms contained in B is, for example, 1 or more and 8 or less, preferably 1 or more and 6 or less.

Preferably, the number of carbon atoms of $R^2$ in A is 2 or more and 18 or less, and the number of carbon atoms of $R^2$ in B is 3 or more and 19 or less. More preferably, the number of carbon atoms of $R^2$ in A is 2 or more and 11 or less, and the number of carbon atoms of $R^2$ in B is 3 or more and 19 or less. Further preferably, the number of carbon atoms of $R^2$ in A is 2 or more and 11 or less, and the number of carbon atoms of $R^2$ in B is 4 or more and 12 or less. Particularly preferably, the number of carbon atoms of $R^2$ in A is 3 or more and 11 or less, and the number of carbon atoms of $R^2$ in B is 4 or more and 12 or less.

In particular, preferred combinations of A and B are listed below:

$R^2$ in A is n-propylene group, and $R^2$ in B is n-butylene group; or
$R^2$ in A is n-butylene group, and $R^2$ in B is n-hexylene group or n-decylene group; or
$R^2$ in A is n-pentylene group, and $R^2$ in B is n-hexylene group; or
$R^2$ in A is n-hexylene group, and $R^2$ in B is n-undecylene group or n-dodecylene group; or
$R^2$ in A is n-undecylene group, and $R^2$ in B is n-dodecylene group.

m and n are each independently an integer from 1 to 46. m and n are preferably each independently an integer from 1 to 40, more preferably an integer from 1 to 30.

The ratio of m to n represents the ratio of groups A to B. m/n is not particularly limited, and is, for example, 0.01 or more and 30 or less, preferably 0.02 or more and 19 or less, more preferably 0.1 or more and 19 or less.

In the formula (1), $R^1$ is a linear, branched or cyclic alkylene group having 1 or more and 20 or less of (a) carbon atom(s). Note that, $R^1$ usually is a linear alkylene group, due to its production process, more specifically $R^2$ that corresponds A or B. The Linear alkylene groups include the alkylene groups that are similar to those mentioned for A and B.

The branched alkylene groups are not particularly limited, and include, for example, 1-methylpropylene group, 2-methylpropylene group, 1,1-dimethylpropylene group, 1,2-dimethylpropylene group, 1,3-dimethylpropylene group, 2,2-dimethylpropylene group, 1,2,3-trimethylpropylene group, 1,1,2-trimethylpropylene group, 1,2,2-trimethylpropylene group, 1,1,3-trimethylpropylene group, 1-methylbutylene group, 2-methylbutylene group, 1,1-dimethylbutylene group, 1,2-dimethylbutylene group, 1,3-dimethylbutylene group, 1,4-dimethylbutylene group, 2,2-dimethylbutylene group, 2,3-dimethylbutylene group, 1,2,3-trimethylbutylene group, 1,2,4-trimethylbutylene group, 1,1,2-trimethylbutylene group, 1,2,2-trimethylbutylene group, 1,3,3-trimethylbutylene group, 1-methylpentylene group, 2-methylpentylene group, 3-methylpentylene group, 2-butyl-2-ethylpentylene group, 1-methylhexylene group, 2-methylhexylene group, 3-methylhexylene group, 1-methylheptylene group, 2-methylheptylene group, 3-methylheptylene group, 4-methylheptylene group, 1-methyloctylene group, 2-methyloctylene group, 3-methyloctylene group, 4-methyloctylene group, 1-methylnonylene group, 2-methylnonylene group, 3-methylnonylene group, 4-methylnonylene group, 5-methylnonylene group, 1-methyldecylene group, 2-methyldecylene group, 3-methyldecylene group, 4-methyldecylene group, and 5-methyldecylene group, and the like.

The cyclic alkylene groups are not particularly limited, but it can be a group having an alicyclic group such as, for example, a cyclopentane ring, cyclohexane ring, cycloheptane ring or cyclooctane ring. In this case, $R^2$ is bound to the adjacent oxygen group directly on the alicyclic group or via an alkylene group having 1 or more and 3 or less carbon atom(s) that has been substituted on the alicyclic group. Such cyclic alkylene group includes, for example, 1,4-cyclohexane-diyl bismethylene group.

The polycarbonate diol Y expressed by the formula (1) may also comprise a unit other than A and B. Such units include, for example, a unit based on an ester of a branched or cyclic alkylene glycol and a carbonic acid. The alkylene groups contained in such unit include a branched or cyclic alkylene group having 1 or more and 20 or less of (a) carbon atom(s), which has been listed for $R^1$ as mentioned above.

The sequence of the units including A and B in a polycarbonate diol Y expressed by the formula (1) is not particularly limited. That is, a polycarbonate diol Y may be either a random copolymer, an alternating copolymer or a block copolymer.

The number average molecular weight of the above-described polycarbonate diol Y is not particularly limited, though it can be, for example, from 250 to 4000 (inclusive), preferably from 500 to 3000 (inclusive). The number average molecular weight of polycarbonate diol can be calculated by, for example, measuring its hydroxyl value.

Specifically, first, the hydroxyl value of the polycarbonate diol Y is measured. The hydroxyl value of the polycarbonate diol Y can be measured in conformity to JIS K 1557-1:2007. On the other hand, the hydroxyl value of the polycarbonate diol Y (mgKOH/g) may also be expressed as the following formula I:

(the hydroxyl value of the polycarbonate diol Y (mgKOH/g))
= 56110 / (the number average molecular weight of polycarbonate diol Y) x (the average number of hydroxyl groups per one molecule of the polycarbonate diol Y) (I)

The average number of hydroxyl groups per one molecule of the polycarbonate diol Y is assumed to be 2.0. Accordingly, the number average molecular weight of the polycarbonate diol Y can be expressed as the following formula (II):

(the number average molecular weight of the polycarbonate diol Y)
= 112,220 / (the hydroxyl value of the polycarbonate diol Y (mgKOH/g)) (II)

In the formula (II) above, the number average molecular weight of the polycarbonate diol Y is calculated by substituting the hydroxyl value of the polycarbonate diol Y obtained in the measurement of the hydroxyl value. Similar calculation may apply to other polycarbonate diol than the polycarbonate diol Y.

The amount of the combined polycarbonate diol Y is not particularly limited, though it is preferably from 10 mass % to 90 mass % (inclusive), more preferably from 20 mass % to 80 mass % (inclusive) against the total mass of the resin of the part in which the polycarbonate diol Y is used. This can further improve the strength of the shoe press belt 1 while suppressing the variation in strength among the parts of the shoe press belt 1. Note that the combined amount described above is the percentage against the amount of the resin in the resin 23 excluding inorganic fillers, which will be described later.

The polyols used for preparing the urethane prepolymer may also comprise other polyol compounds than the polycarbonate diol Y expressed by the above-mentioned formula (1). Such polyol compounds are not particularly limited and include, for example, polyester polyols such as polycaprolactone polyol, polyethylene adipate; polyether polyols such as polyethylene glycol, polyoxypropylene glycol, polyhexamethylene ether glycol, polytetramethylene ether glycol (PTMG); and linear aliphatic polycarbonate diol, polyether carbonate diol, trimethylolpropane, polybutadiene polyol, perfluoropolyether polyol, long-chain polyol compounds such as silicon polyols such as silicon diol, any one of which may be used alone, or more than one may be used in combination.

Linear aliphatic polycarbonate diols include such as, for example, polymethylene carbonate diol, polyethylene carbonate diol, polypropylene carbonate diol, polybutylene carbonate diol, polypentamethylene carbonate diol, polyhexamethylene carbonate diol, polyheptamethylene carbonate diol, and polyoctamethylene carbonate diol.

Note that the content of polycarbonate diol(s) Y in a polyol compound that constitutes an urethane prepolymer is preferably 10 mass % or more, more preferably 25 mass % or more. This results in a sufficient effect as mentioned above.

The aliphatic polyisocyanate that constitutes the urethane prepolymer is not particularly limited and includes, for

example, chain aliphatic polyisocyanates such as 1,6-hexamethylene diisocyanate (HDI) and 1,5-pentamethylene diisocyanate, and alicyclic polyisocyanates such as 1-isocyanate-3-isocyanate methyl-3,5,5-trimethylcyclohexane (IPDI), dicyclohexylmethane-4,4'-diisocyanate (H12MDI), 1,3-cyclohexyldiisocyanate, 1,4-cyclohexyldiisocyanate (CHDI), 1,4-bis-(isocyanatemethyl)cyclohexane (H6XDI) and isophorone diisocyanate, of which one can be used alone or two or more can be used in combination.

Among those mentioned above, the aliphatic polyisocyanate preferably comprises an alicyclic polyisocyanate. This further improves the strength of the resulting polyurethane resin.

Among those mentioned above, the aliphatic polyisocyanates more preferably comprise 1,4-bis-(isocyanatemethyl)cyclohexane (H6XDI). This can establish both a high strength and large extension in the resulting polyurethane resin.

The polyisocyanate compounds used in an urethane prepolymer may also comprise other polyisocyanate compounds than the aforementioned aliphatic polyisocyanates. Such polyisocyanate compounds include, for example, an aromatic polyisocyanate. Aromatic polyisocyanates include, such as, for example, 2,4-tolylene-diisocyanate (2,4-TDI), 2,6-tolylene-diisocyanate (2,6-TDI), 4,4'-methylene bis(phenylisocyanate) (MDI), p-phenylene-diisocyanate (PPDI), dimethylbiphenylene diisocyanate (TODI), naphthalene-1,5-diisocyanate (NDI), 4,4-dibenzyldiisocyanate (DBDI), xylylene diisocyanate (XDI), tetramethylxylylene-diisocyanate (TMXDI), and polymethylene polyphenyl polyisocyanate (polymeric MDI).

Note that the content of the aliphatic polyisocyanate in a polyisocyanate compound that constitutes an urethane prepolymer is preferably 10 mass % or more, more preferably 50 mass % or more. This results in a sufficient effect as mentioned above.

The curing agent having an active hydrogen group is not particularly limited, and one or more compound(s) selected from the group consisting of polyol compounds and polyamines may be used.

As a polyol compound which can be contained in the curing agent, in addition to the long-chain polyol compounds mentioned above, various aliphatic polyol compounds and various alicyclic or aromatic polyol compounds may be used.

Aliphatic polyol compounds are not particularly limited and include, for example, alkylene glycol compounds such as ethylene glycol, diethylene glycol, triethylene glycol, tetraethylene glycol, 1,2-propanediol, 1,3-propanediol, dipropylene glycol, tripropylene glycol, 1,2-butanediol, 1,3-butanediol, 1,4-butanediol, 2,3-butanediol, 1,5-pentanediol, 1,5-hexanediol, 1,6-hexanediol, 2,5-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol, 1,20-icosanediol, 2-methyl-1,3-propanediol, neopentylglycol, 2-butyl-2-ethyl-1,3-propanediol, 3-methyl-1,5-pentanediol, 2-ethyl-1,3-hexanediol and 2-methyl-1,8-octanediol, and glycerin, ditrimethylol propane, trimethylol propane (TMP), pentaerythritol and dihydroxymethyl propionic acid (DHPA), and the like.

Alicyclic polyol compounds are not particularly limited and include, for example, 1,4-cyclohexane dimethanol, hydrogenated bisphenol A, and the like.

Aromatic polyol compounds are not particularly limited and include, for example, hydroquinone bis-β-hydroxyethyl ether (HQEE), hydroxyphenyl ether resorcinol (HER), 1,3-bis(2-hydroxyethoxybenzene), 1,4-bis(2-hydroxyethoxybenzene), bisphenol A, an alkylene oxide adduct of bisphenol A, bisphenol S, an alkylene oxide adduct of bisphenol S, and the like.

Polyamines are not particularly limited and include hydrazine, ethylene diamine, 4,4'-methylene-bis-(2-chloroaniline) (MOCA), dimethylthiotoluene diamine (DMTDA), diethylthiotoluene diamine, diethyltoluene diamine (DETDA), trimethylene glycol di(p-aminobenzoate)(TMAB), 4,4'-methylene-bis-(3-chloro-2,6-diethylaniline)(MCDEA), 4,4'-methylene -bis-(2,6-diethylaniline) (MDEA), triisopropanolamine (TIPA), *p*-bis(aminocyclohexyl)methane (PACM), naphthalene-1,5-diamine, xylylene diamine, phenylene diamine, toluene-2,4-diamine, t-butyltoluene diamine, 1,2-bis(2-aminophenylthioethane), and the like.

Among those mentioned above, the curing agent preferably comprises aliphatic polyol compound and/or polyamine, more preferably alkylene glycol compound, dimethylthiotoluene diamine and/or diethyltoluene diamine, further preferably 1,4-butanediol, dimethylthiotoluene diamine and/or diethyltoluene diamine, in order to further improve the strength of the resulting resin 23 while further suppressing the variation in strength among the parts of the shoe press belt 1.

Moreover, the resin 23 may comprise inorganic fillers such as titanium oxide, kaolin, clay, talc, diatomaceous earth, calcium carbonate, calcium silicate, magnesium silicate, silica and mica, which can be alone or in combination of two or more.

Note that, when the polyurethane resin formed by using a urethane prepolymer obtained by reacting a polyol comprising polycarbonate diol(s) Y with an aliphatic polyisocyanate is contained either in the resin 33 of the second resin layer 30 or in the resin 13 of the reinforcing fibrous substrate layer 10, the first resin layer 20 do not have to comprise the aforementioned polyurethane resin. In this case, as ingredients of the resin 23 of the first resin layer 20, a thermosetting resin such as a polyurethane resin (note that it does not comprise polycarbonate diol Y as its component), an epoxy resin and acryl resin, or a thermoplastic resin such as polyamide, polyarylate and polyester, may be used alone or in combination

of two or more.

As the resin 33 which constitutes the second resin layer 30, resin materials which can be used in the first resin layer 20 as mentioned above may be used alone or in combination of two or more. The resin 33 which constitutes the second resin layer 30 may be the same as or different from the resin 23 which constitutes the first resin layer 20 in the type and composition. In particular, from the perspective of improving the durability of the second resin layer 30 and of improving efficiency in resin production, it is preferred that the resin 33 is the same as the resin 23 of the first resin layer 20.

Moreover, the second resin layer 30 preferably comprises a polyurethane resin formed by using an urethane prepolymer obtained by reacting a polyol comprising polycarbonate diol(s) Y with an aliphatic polyisocyanate. The second resin layer 30 constitutes the inner circumferential surface 31 of the shoe press belt 1. In the shoe press belt 1, inner circumferential surface 31 is a part which is prone to being damaged (e.g., cracks) due to friction with the shoe upon using the shoe press belt 1 and bending fatigue of the shoe press belt 1. Accordingly, the durability of the shoe press belt 1 is improved by including a polyurethane resin formed by using an urethane prepolymer obtained by reacting a polyol comprising polycarbonate diol(s) Y with an aliphatic polyisocyanate in the second resin layer 30 which constitute the inner circumferential surface 21 of the shoe press belt 1.

As the resin 13 which constitutes the reinforcing fibrous substrate layer 10, resin materials which can be used in the first resin layer 20 as mentioned above may be used alone or in combination of two or more. The resin 13 which constitutes the reinforcing fibrous substrate layer 10 may be the same as or different from the resin 23 which constitutes the first resin layer 20 in the type and composition. In particular, from the perspective of improving efficiency in resin production, the resin 13 which constitutes the reinforcing fibrous substrate layer 10 could be the same as the resin 23 of the first resin layer 20.

Moreover, the reinforcing fibrous substrate layer 10 comprises a polyurethane resin formed by using an urethane prepolymer obtained by reacting a polyol comprising polycarbonate diol(s) Y with an aliphatic polyisocyanate. This improves the durability of the shoe press belt 1.

The dimensions of the shoe press belt 1 as mentioned above are not particularly limited, and set as appropriate for its intended use.

For instance, the width of the shoe press belt 1 is not particularly limited, though it may be set to between 700 mm and 13500 mm, preferably between 2500 mm and 12500 mm.

Moreover, for example, the length (circumference) of the shoe press belt 1 is not particularly limited, though it may be set to between 150 cm and 1500 cm, preferably between 200 cm and 1100 cm.

Moreover, the thickness of the shoe press belt 1 is not particularly limited, though it may be set to be, for example, between 1.5 mm and 7.0 mm, preferably between 2.0 mm and 6.0 mm.

Moreover, the thickness of the shoe press belt 1 may be different for each part, or it may be the same.

As above, in the shoe press belt 1 according to the present embodiments, at least any one of the resin 13 of the reinforcing fibrous substrate layer 10, the resin 23 of the first resin layer 20, and the resin 33 of the second resin layer 30 comprises a polyurethane resin formed by using an urethane prepolymer obtained by reacting a polyol comprising polycarbonate diol(s) Y with an aliphatic polyisocyanate. Accordingly, the shoe press belt 1 has suppressed variation in strength among the parts and is excellent in strength.

Next, shoe press belts according to other embodiments of the present embodiments will be described. FIG. 2 is a cross-sectional view in a cross machine direction showing a shoe press belt according to another embodiment of the present invention. Hereinbelow, the differences from the aforementioned embodiments will be principally described, while cutting description about similar matters.

As shown in FIG. 2, the shoe press belt 1A has multiple drains 25 formed on the outer circumferential surface 21 of the first resin layer 20A. Because the shoe press belt 1A has the drains 25, more moisture can be dehydrated from the supported wet paper web upon using the shoe press belt 1A.

The configuration of the drain 25 is not particularly limited, though, in general, multiple continuous drains are formed in parallel in the machine direction of the shoe press belt 1A. For instance, the groove width may be set to between 0.5 mm and 2.0 mm, the groove depth between 0.4 mm and 2.0 mm, and the number of drains between 5 and 20 drains/inch. Moreover, the cross-sectional shape of the drain 25 may be set as appropriate, such as a rectangle, trapezoidal, U-shaped, or it may be set such that the parts where the land and groove bottom are met with the groove wall are rounded.

Moreover, the configurations of these drains 25 may be the same for the groove width and depth, the number of drains and the cross-sectional shape, or the drains of different configurations may be combined. Furthermore, these drains 25 may be formed as discontinuous bodies, or may be formed as multiple drains which are arranged in parallel to the cross machine direction.

As above, in the shoe press belt 1A according to the present embodiment, too, at least any one of the resin 13 of the reinforcing fibrous substrate layer 10, the resin 23 of the first resin layer 20A, the resin 33 of the second resin layer 30 comprises a polyurethane resin formed by using an urethane prepolymer obtained by reacting a polyol comprising polycarbonate diol(s) Y with an aliphatic polyisocyanate . Accordingly, the shoe press belt 1A has suppressed variation in

strength among the parts, and is excellent in strength.

<2. Method for producing a shoe press belt >

Next, preferred embodiments of a method for producing a shoe press belt of the present invention will be described. FIGS. 3 to 5 are schematic drawings illustrating the preferred embodiments of the method for producing the shoe press belt.

The method for producing the shoe press belt according to the present invention is a method for producing a shoe press belt for use in a papermaking machine, comprising a step of forming a resin layer by curing an urethane prepolymer having an isocyanate group with a curing agent having an active hydrogen group, wherein the urethane prepolymer is obtained by reacting a polyol comprising one or more polycarbonate diol(s) Y expressed by the following formula (1):

$$HO\text{-}A_m\text{-}B_n\text{-}R^1OH \qquad (1)$$

with an aliphatic polyisocyanate, wherein:

in the formula (1),

A and B are each differently a unit expressed by the following formula (2):

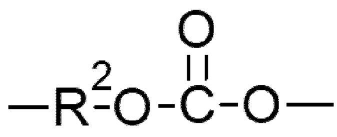

(2)

$R^1$ is a linear, branched or cyclic alkylene group having 1 or more and 20 or less of (a) carbon atom(s), m and n are each independently an integer from 1 to 46, and

in the formula (2),

$R^2$ is a linear alkylene group having 1 or more and 20 or less of (a) carbon atom(s).

Specifically, a method for producing a shoe press belt according to one embodiment of the present invention comprises a step of forming a resin layer which forms a first resin layer 20, a reinforcing fibrous substrate layer 10, and a second resin layer 30.

In the step of forming a resin layer, a resin layer is formed. In this step, specifically, a laminated body is formed, which has the reinforcing fibrous substrate layer 10, in which annular and band-shaped reinforcing fibrous substrate 11 is embedded in the resin 13, and the first resin layer 20 and the second resin layer 30 laminated on both sides of the reinforcing fibrous substrate layer 10 as resin layers.

The formation of such laminated body can be made by any method, though, in the present embodiment, the second resin layer 30 is formed. Next, the reinforcing fibrous substrate 11 is disposed on one surface of the second resin layer 30, and a resin material is applied onto the reinforcing fibrous substrate 11 and allowed to be impregnated and penetrated in it to form a laminated body in which the reinforcing fibrous substrate layer 10 and the second resin layer 30 are integrated. Then, the first resin layer 20 is formed on the surface of the reinforcing fibrous substrate layer 10 which is orientated opposite to the bonding plane of the reinforcing fibrous substrate layer 10 and the second resin layer 30.

Specifically, for example, first, as shown in FIG. 3, a resin material is applied to the surface of the mandrel 110 on which a release agent has been applied, while rotating the mandrel 110, such that the thickness of the resin will be from 0.8 to 3.5 mm. This forms a resin precursor layer that is to be the second resin layer 30. Then, the temperature of the resin precursor layer is risen to between 40 and 140 °C, pre-cured it for 0.5 to 1 hour to form the second resin layer 30.

Then, the reinforcing fibrous substrate 11 is disposed onto the pre-cured second resin layer 30 (not illustrated), and, as shown in FIG.4, while rotating the mandrel 110, a resin material which will form the reinforcing fibrous substrate layer 10 is applied in 0.5 to 2.0 mm, allowed to be impregnated and penetrated in the reinforcing fibrous substrate, and at the same time bonded to the second resin layer 30 to form a laminated body in which the reinforcing fibrous substrate layer 10 and the second resin layer 30 are integrated.

Thereafter, as shown in FIG. 5, while rotating the mandrel 110, a resin material which will form the first resin layer 20 is applied onto the surface of the reinforcing fibrous substrate layer 10 described above and allowed to be impregnated in it to form a resin precursor layer of thickness of 1.5 to 4 mm, which is to be the first resin layer 20. Then, the resin precursor layer is heated and cured at 70 to 140 °C for 2 to 20 hours to form a laminated body in which the first resin layer 20, the reinforcing fibrous substrate layer 10, and the second resin layer 30 are laminated.

Besides, the application of the resin material may be done by any method, though, in the present embodiment,

this is done by discharging the resin material from the injection molding nozzle 130, while rotating the mandrel 110, and at the same time uniformly applying the provided resin material using a coater bar 120.

Here, in at least any one of the resin 13 of the reinforcing fibrous substrate layer 10, the resin 23 of the first resin layer 20, and the resin 33 of the second resin layer 30, a polyurethane resin is formed by curing an urethane prepolymer having an isocyanate group with a curing agent having an active hydrogen group, wherein the urethane prepolymer is obtained by reacting a polyol comprising one or more polycarbonate diol(s) Y expressed by the above-described formula (1) with an aliphatic polyisocyanate. As mentioned above, in the prepolymer and the urethane composition (resin material) obtained by reacting the polycarbonate diol Y with aliphatic polycarbonate diol, the increase in viscosity is suppressed. Accordingly, it is possible to form a uniform polyurethane resin layer.

Moreover, heating method is not particularly limited, though, for example, methods using far-infrared heater, etc. may be used.

The obtained laminated body goes through polishing or buff processing or as appropriate for the outer circumferential surface 21 and the inner circumferential surface 31, the ends of width direction are cut as appropriate and cleaned up, to provide the shoe press belt 1. The shoe press belt 1 is produced as above.

Moreover, when the shoe press belt 1A is to be produced, for a laminated body formed in the aforementioned resin layer-forming step, the drains 25 may be formed on the outer circumferential surface 21 as follows.

The formation of such drains 25 can be done by any method, though, for example, the drains 25 may be formed by: polishing/buff-processing the outer surface of the laminated body obtained as above to achieve the desired thickness of the shoe press belt 1 (not illustrated), then, while rotating the mandrel 110, bringing a grooving device to which multiple disk-like rotary blades into contact with the outer circumferential surface 21.

The method for producing the shoe press belt in the above-described embodiment has been described as mandrel (one-roll) production method. However, as another embodiment, a two-roll production method as described below can also be employed. First, an annular reinforcing fibrous substrate 11 is hung over two rolls placed in parallel, and a resin is applied onto this reinforcing fibrous substrate 11, impregnated and laminated to form the second resin layer 30 with the reinforcing fibrous substrate layer 10. Then, this is turned over, and the first resin layer 20 is formed on the surface of the inverted reinforcing fibrous substrate layer 10. This provides the shoe press belt 1. Besides, the order of formation of each resin layer may be optional.

Hereinabove, the present invention has been described on the basis of the preferred embodiment in detail.

[Example]

Hereinafter, the present invention will be described more specifically on the basis of examples. However, the present invention is not limited to those examples.

1. Production of Shoe Press Belt and Polyurethane Sheet Test Piece

Prior to producing shoe press belts, first, we prepared polycarbonate diols indicated in Table 1, polytetramethylene ether glycols indicated in Table 2, and resin materials (urethane compositions) of the compositions of Examples 1 and 2 and Comparative Examples 1-3 indicated in Table 3 obtained using these polycarbonate diols and the polytetramethylene ether glycols. Note that, for all resin materials, the urethane prepolymer and the curing agent were combined such that the combination ratio would be [H]/[NCO] ratio = 0.95.

Next, shoe press belts were prepared according to the following method using the resin materials of Examples 1 and 2 and Comparative Examples 1-3.

To a surface of a mandrel having a diameter of 1500 mm and rotatable by any appropriate driving means, a resin material of either of Examples 1 and 2 and Comparative Examples 1-3 was applied to 1.4 mm thick while rotating the mandrel, using an injection molding nozzle that is capable of running parallel to the rotary shaft of the mandrel. This formed an uncured shoe-side resin layer (second resin layer). Then, the mandrel was left being rotated at a room temperature for 10 minutes, heated to 140°C by a heating device attached to the mandrel, and pre-cured at 140°C for 1 hour.

Next, a grid-like web material that consists of warps interposed between weft yarns where the intersection of a weft yarn and a warp was joined with urethane-type resin adhesive was placed in one layer on the outer circumferential surface of the shoe-side resin layer such that weft yarns are arranged along the shaft of the mandrel leaving no space. Here, the weft yarn of the grid-like web material is multifilament twist yarn of polyethylene terephthalate fiber of 5000 dtex, whereas the warp is multifilament yarn of polyethylene terephthalate fiber of 550 dtex. The warp density was set to 1 yarn/cm, whereas weft yarn density was set to 4 yarns/cm.

Next, a yarn wound layer was formed by helicoidally winding multifilament yarns of polyethylene terephthalate fiber of 6700 dtex around on the circumference of this grid-like web material with a pitch of 30 yarns/5 cm, and the grid-like web material and yarn wound layer together formed a reinforcing fibrous substrate. Then, the resin material same as that of the shoe-side resin layer (resin materials of Examples 1 and 2 and Comparative Examples 1-3) was applied so as to close

gaps in the reinforcing fibrous substrate, forming a laminated body in which the reinforcing fibrous substrate layer and the shoe-side resin layer are integrated.

Next, over the reinforcing fibrous substrate layer, while rotating the mandrel, the resin material same as those of the reinforcing fibrous substrate layer and shoe-side resin layer (resin materials of Examples 1 and 2 and Comparative Examples 1-3) was applied to about 2.5 mm thick using an injection molding nozzle that is capable of running parallel to the rotating shaft of the mandrel to form an uncured felt-side resin layer (first resin layer).

Then, this was left at room temperature for 40 minutes while keeping the mandrel being rotated, further heated to 140 °C with heating equipment attached to the mandrel, and each resin layer was thermally cured at 140 °C for 4 hours. This formed a laminated body in which the felt-side resin layer, the reinforcing fibrous substrate layer, and the shoe-side resin layer are integrated.

Subsequently, the felt-contact surface of the felt-side resin layer was polished such that the total thickness would be 5.2 mm to give a laminated body.

After the steps above, shoe press belts according to Examples 1 and 2 and Comparative Examples 1-3 were obtained. An evaluation of hardness was performed for the obtained shoe press belts. Moreover, in order to evaluate the breaking strength and variation in tensile testing, test pieces of 1.0 mm thick polyurethane sheet were cut out from arbitrary 20 positions of the felt-side resin layer.

## 2. Evaluation

### 2.1 Prepolymer Viscosity

For prepolymers used for resin materials of Examples 1 and 2 and Comparative Examples 1-3, viscosity was measured. The viscosity of prepolymers at temperatures 50 and 80 °C were measured using a B-type viscometer (TOKI SANGYO Co., Ltd., Product name: TVB-10H). The rotor used was H3 rotor, and the measurement was performed at revolution speed of 50 rpm for the cases of 200 to 2,000 mPa·s, 5 rpm for the cases of 2,000 to 20,000 mPa·s.

### 2.2 Evaluation of Hardness

Hardness was measured for the outer circumferential surfaces of the shoe press belts according to Examples 1 and 2 and Comparative Examples 1-3. Specifically, the surface hardness of the felt-side resin layers was measured in conformity to JIS K 6301:1995 and using an A-type, spring-type hardness tester.

### 2.3 Evaluation of Breaking Strength in Tensile Testing

The breaking strength was measured using a universal tensile testing machine as the testing machine and a test piece of dumbbell-No. 3-shape defined in JIS K 6251 for the sample shape, at tension rate of 500 mm/min, and evaluated as stress (MPa) at the time of breaking of the test piece. Twenty measurements were made for each Example/Comparative Example, and the average value was presented.

### 2.4 Evaluation of Variation in Breaking Strength

The variation in the breaking strength was evaluated by calculated standard deviations(SDs) for 20 measurements of the breaking strength in the tensile testing.

Table 3 shows the results of the above evaluations along with the compositions of the resin materials of Examples 1 and 2 and Comparative Examples 1-3, etc. In Table 3, "H6XDI" indicates 1,4-bis(isocyanate methyl)cyclohexane, "MDI" indicates 4,4'-methylene bis(phenyl isocyanate), "BD" indicates 1,4-butanediol, and "TMP" indicates trimethylolpropane, respectively.

Moreover, the number average molecular weight of the polycarbonate diol in Table 1 was calculated by measuring the hydroxyl value for each polycarbonate diol and calculating the number average molecular weight by the formula (II) described above based on the obtained hydroxyl value. The same applies to polytetramethylene ether glycols in Table 2. Furthermore, for polycarbonate diols PCD1 to PCD3 in Table 1, the number of each diol constituent per one molecule was calculated to be 30 or less, based on the obtained number average molecular weight and the quantity ratio of diol constituents.

Table 1

<table>
<tr><th rowspan="2">Polycarbonate Diol</th><th colspan="2">Diol Constituents</th><th rowspan="2">Diol 1 /Diol 2 (mol/mol)</th><th rowspan="2">Number Average Molecular Weight</th><th rowspan="2">Hydroxyl Value (mg KOH/g)</th></tr>
<tr><th>Diol 1</th><th>Diol 2</th></tr>
<tr><td>PCD1</td><td>1,4-butanediol</td><td>1,6-hexanediol</td><td>70/30</td><td>2,082</td><td>53.9</td></tr>
<tr><td>PCD2</td><td>1,6-hexanediol</td><td>1,5-pentanediol</td><td>50/50</td><td>1,983</td><td>56.6</td></tr>
<tr><td>PCD3</td><td>1,6-hexanediol</td><td>1,5-pentanediol</td><td>50/50</td><td>1,009</td><td>111.2</td></tr>
<tr><td>PCD4</td><td>1,6-hexanediol</td><td>-</td><td>100/0</td><td>2,074</td><td>54.1</td></tr>
</table>

Table 2

| Polytetramethylene Ether Glycol | Number Average Molecular Weight | Hydroxyl Value (mg KOH/g) |
|---|---|---|
| PTMG1 | 1,039 | 108.0 |

Table 3

<table>
<tr><th colspan="3"></th><th>Example 1</th><th>Example 2</th><th>Comparative Example 1</th><th>Comparative Example 2</th><th>Comparative Example 3</th></tr>
<tr><td rowspan="10">Resin material</td><td rowspan="5">Prepolymer</td><td>Type of isocyanate compound</td><td>H6XDI</td><td>H6XDI</td><td>H6XDI</td><td>H6XDI</td><td>MDI</td></tr>
<tr><td rowspan="2">Type of polyol compound</td><td rowspan="2">PCD1</td><td>PCD2 75%</td><td rowspan="2">PTMG1</td><td rowspan="2">PCD4</td><td>PCD2 45.6%</td></tr>
<tr><td>PCD3 25%</td><td>PCD3 54.4%</td></tr>
<tr><td>Proportion of PCD in polyol compound (mass %)</td><td>100</td><td>100</td><td>0</td><td>100</td><td>100</td></tr>
<tr><td>NCO%</td><td>6.94</td><td>7.71</td><td>7.12</td><td>7.01</td><td>8.83</td></tr>
<tr><td rowspan="3">Curing agent</td><td rowspan="2">Type</td><td rowspan="2">BD</td><td>BD</td><td rowspan="2">BD</td><td rowspan="2">BD</td><td rowspan="2">BD</td></tr>
<tr><td>TMP</td></tr>
<tr><td>Proportion of PCD in curing agent (mass %)</td><td>0</td><td>0</td><td>0</td><td>0</td><td>0</td></tr>
<tr><td colspan="2">PCD content in polyurethane (mass %)</td><td>72</td><td>68</td><td>0</td><td>72</td><td>56</td></tr>
<tr style="display:none"></tr>
<tr><td rowspan="5">Evaluation</td><td rowspan="2">Prepolymer viscosity (mPa·s)</td><td>@50 °C</td><td>18,800</td><td>20,000</td><td>1,600</td><td>31,750</td><td>28,000</td></tr>
<tr><td>@80 °C</td><td>3,900</td><td>4,300</td><td>490</td><td>6,480</td><td>5,000</td></tr>
<tr><td colspan="2">Hardness (JIS A)</td><td>95</td><td>95</td><td>95</td><td>95</td><td>95</td></tr>
<tr><td rowspan="2">Tensile testing breaking strength (Mpa)</td><td>Mean Value</td><td>48.1</td><td>42.5</td><td>29.4</td><td>42.6</td><td>42.8</td></tr>
<tr><td>SD</td><td>2.2</td><td>2.4</td><td>1.3</td><td>4.0</td><td>3.2</td></tr>
</table>

As shown in Table 3, the shoe press belts according to Examples 1 and 2 have suppressed variation in strength among their parts and further is comparably as good in strength as compared to the shoe press belts according to Comparative Examples 2 and 3. In the shoe press belt according to Comparative Example 1 in which no polycarbonate

was used, variation in strength among their parts was suppressed, though the strength was considerably low as compared to the shoe press belts according to Examples 1 and 2.

Moreover, the shoe press belts according to Comparative Example 2 in which a linear aliphatic polycarbonate diol using a single diol component was used in urethane prepolymer and Comparative Example 3 in which linear aliphatic polycarbonate diols were used together with an aromatic isocyanate in urethane prepolymer were excellent in strength though it had large variation in strength among the parts. Because of this, the shoe press belts of Comparative Examples 2 and 3 is likely to be broken, starting from a part with weak strength. That is, the durability of the shoe press belt was failed to be improved.

[Reference signs list]

| | |
|---|---|
| 1, 1A | Shoe press belt |
| 10 | Reinforcing fibrous substrate layer |
| 11 | Reinforcing fibrous substrate |
| 13 | Resin |
| 20, 20A | First resin layer |
| 21 | Outer circumferential surface |
| 23 | Resin |
| 25 | Drains |
| 30 | Second resin layer |
| 31 | Inner circumferential surface |
| 33 | Resin |

**Claims**

1. A shoe press belt for use in a papermaking machine,
comprising at least one resin layer, wherein:
the resin layer comprises a polyurethane resin formed by curing an urethane prepolymer having an isocyanate group with a curing agent having an active hydrogen group, wherein the urethane prepolymer is obtained by reacting a polyol comprising one or more polycarbonate diol(s) expressed by the following formula (1):

$$HO\text{-}A_m\text{-}B_n\text{-}R^1OH \qquad (1)$$

with an aliphatic polyisocyanate, wherein:

in the formula (1),

A and B are each differently a unit expressed by the following formula (2):

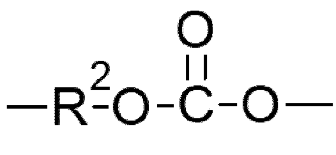

(2)

$R^1$ is a linear, branched or cyclic alkylene group having 1 or more and 20 or less of (a) carbon atom(s),
m and n are each independently an integer from 1 to 46, and

in the formula (2),
$R^2$ is a linear alkylene group having 1 or more and 20 or less of (a) carbon atom(s).

2. The shoe press belt according to claim 1, wherein the absolute difference between the number of carbon atoms contained in A and the number of carbon atoms contained in B in the formula (1) is 1 or more and 8 or less.

3. The shoe press belt according to claim 1 or 2, wherein the number of carbon atoms of $R^2$ in A is 2 or more and 11 or less, and the number of carbon atoms of $R^2$ in B is 3 or more and 19 or less.

**4.** The shoe press belt according to any one of claims 1 to 3, wherein:

$R^2$ in A is n-propylene group, and $R^2$ in B is n-butylene group; or
$R^2$ in A is n-butylene group, and $R^2$ in B is n-hexylene group or n-decylene group; or
$R^2$ in A is n-pentylene group, and $R^2$ in B is n-hexylene group; or
$R^2$ in A is n-hexylene group, and $R^2$ in B is n-undecylene group or n-dodecylene group; or
$R^2$ in A is n-undecylene group, and $R^2$ in B is n-dodecylene group.

**5.** The shoe press belt according to any one of claims 1 to 4, wherein the aliphatic polyisocyanate comprises alicyclic polyisocyanate compound.

**6.** The shoe press belt according to any one of claims 1 to 5, wherein the aliphatic polyisocyanate comprises 1,4-bis(isocyanatemethyl)cyclohexane.

**7.** The shoe press belt according to any one of claims 1 to 6, comprising as the resin layer a layer which constitutes an outer circumferential surface of the shoe press belt and comprises the polyurethane resin.

**8.** The shoe press belt according to any one of claims 1 to 7, comprising as the resin layer a layer which constitutes the inner circumferential surface of the shoe press belt and comprises the polyurethane resin.

**9.** A method for producing a shoe press belt for use in a papermaking machine, the method comprising a step of forming a resin layer by curing an urethane prepolymer having an isocyanate group with a curing agent having an active hydrogen group, wherein the urethane prepolymer is obtained by reacting a polyol comprising one or more polycarbonate diol(s) expressed by the following formula (1):

$$HO\text{-}A_m\text{-}B_n\text{-}R^1OH \quad (1)$$

with an aliphatic polyisocyanate, wherein:

in the formula (1),

A and B are each differently a unit expressed by the following formula (2):

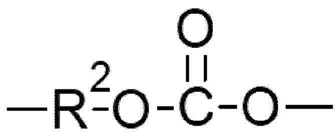

(2)

$R^1$ is a linear, branched or cyclic alkylene group having 1 or more and 20 or less of (a) carbon atom(s),
m and n are each independently an integer from 1 to 46, and

in the formula (2),
$R^2$ is a linear alkylene group having 1 or more and 20 or less of (a) carbon atom(s).

## Patentansprüche

**1.** Schuhpressband zur Verwendung in einer Papierherstellungsmaschine,
umfassend mindestens einer Harzschicht, wobei:
die Harzschicht ein Polyurethanharz umfasst, das durch Aushärten eines eine Isocyanatgruppe aufweisenden Urethan-Prepolymers mit einem eine aktive Wasserstoffgruppe aufweisenden Härtungsmittel gebildet wird, wobei das Urethan-Prepolymer durch Umsetzen eines Polyols, umfassend ein oder mehrere Polycarbonatdiol(e), angegeben durch die folgende Formel (1):

$$HO\text{-}A_m\text{-}B_n\text{-}R^1OH \quad (1)$$

mit einem aliphatischen Polyisocyanat erhalten wird, wobei:

in der Formel (1)

A und B jeweils unterschiedlich eine Einheit sind, die durch die folgende Formel (2) angegeben wird:

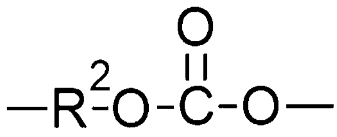 (2)

$R^1$ eine lineare, verzweigte oder cyclische Alkylengruppe mit 1 oder mehr und 20 oder weniger Kohlenstoffatom(en) ist,
m und n jeweils unabhängig voneinander eine ganze Zahl von 1 bis 46 sind, und

in der Formel (2)
$R^2$ eine lineare Alkylengruppe mit 1 oder mehr und 20 oder weniger Kohlenstoffatom(en) ist.

**2.** Schuhpressband gemäß Anspruch 1, wobei die absolute Differenz zwischen der Anzahl der in A enthaltenen Kohlenstoffatome und der Anzahl der in B enthaltenen Kohlenstoffatome in der Formel (1) 1 oder mehr und 8 oder weniger beträgt.

**3.** Schuhpressband gemäß Anspruch 1 oder 2, wobei die Anzahl der Kohlenstoffatome von $R^2$ in A 2 oder mehr und 11 oder weniger beträgt und die Anzahl der Kohlenstoffatome von $R^2$ in B 3 oder mehr und 19 oder weniger beträgt.

**4.** Schuhpressband gemäß einem der Ansprüche 1 bis 3, wobei:

$R^2$ in A eine n-Propylengruppe ist und $R^2$ in B eine n-Butylengruppe ist;
oder
$R^2$ in A eine n-Butylengruppe ist und $R^2$ in B eine n-Hexylengruppe oder eine n-Decylengruppe ist; oder
$R^2$ in A eine n-Pentylengruppe ist und $R^2$ in B eine n-Hexylengruppe ist;
oder
$R^2$ in A eine n-Hexylengruppe ist und $R^2$ in B eine n-Undecylengruppe oder eine n-Dodecylengruppe ist; oder
$R^2$ in A eine n-Undecylengruppe ist und $R^2$ in B eine n-Dodecylengruppe ist.

**5.** Schuhpressband gemäß einem der Ansprüche 1 bis 4, wobei das aliphatische Polyisocyanat eine alicyclische Polyisocyanatverbindung umfasst.

**6.** Schuhpressband gemäß einem der Ansprüche 1 bis 5, wobei das aliphatische Polyisocyanat 1,4-Bis(isocyanatmethyl)cyclohexan umfasst.

**7.** Schuhpressband gemäß einem der Ansprüche 1 bis 6, umfassend als die Harzschicht eine Schicht, die eine äußere Umfangsfläche des Schuhpressbandes bildet und das Polyurethanharz umfasst.

**8.** Schuhpressband gemäß einem der Ansprüche 1 bis 7, umfassend als die Harzschicht eine Schicht, die die innere Umfangsfläche des Schuhpressbandes bildet und das Polyurethanharz umfasst.

**9.** Verfahren zur Herstellung eines Schuhpressbandes zur Verwendung in einer Papierherstellungsmaschine, wobei das Verfahren einen Schritt des Bildens einer Harzschicht durch Aushärten eines eine Isocyanatgruppe aufweisenden Urethan-Prepolymers mit einem eine aktive Wasserstoffgruppe aufweisenden Härtungsmittel umfasst, wobei das Urethan-Prepolymer durch Umsetzen eines Polyols, umfassend ein oder mehrere Polycarbonatdiol(e), angegeben durch die folgende Formel (1):

$$HO\text{-}A_m\text{-}B_n\text{-}R^1OH \qquad (1)$$

mit einem aliphatischen Polyisocyanat erhalten wird, wobei:

in der Formel (1)

A und B jeweils unterschiedlich eine Einheit sind, die durch die folgende Formel (2) angegeben wird:

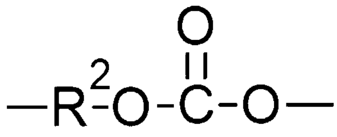

(2)

$R^1$ eine lineare, verzweigte oder cyclische Alkylengruppe mit 1 oder mehr und 20 oder weniger Kohlenstoffatom(en) ist,
m und n jeweils unabhängig voneinander eine ganze Zahl von 1 bis 46 sind, und

in der Formel (2)
$R^2$ eine lineare Alkylengruppe mit 1 oder mehr und 20 oder weniger Kohlenstoffatom(en) ist.

**Revendications**

1. Courroie de presse à sabot destinée à être utilisée dans une machine pour la fabrication du papier, comprenant au moins une couche de résine, dans laquelle :

la couche de résine comprend une résine de polyuréthane formée en durcissant un prépolymère d'uréthane ayant un groupe isocyanate avec un agent durcissant ayant un groupe hydrogène actif, dans laquelle le prépolymère d'uréthane est obtenu en faisant réagir un polyol comprenant un ou plusieurs polycarbonate diol(s) exprimé(s) par la formule suivante (1) :

$$HO\text{-}A_m\text{-}B_n\text{-}R^1OH \qquad (1)$$

avec un polyisocyanate aliphatique, dans laquelle :
dans la formule (1),

A et B sont chacun différemment une unité exprimée par la formule suivante (2) :

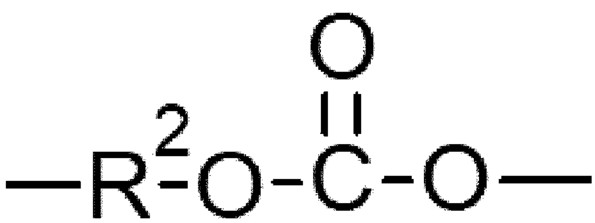

(2)

$R^1$ est un groupe alkylène linéaire, ramifié ou cyclique ayant 1 ou plus et 20 ou moins atome(s) de carbone,
m et n sont chacun indépendamment un entier de 1 à 46, et
dans la formule (2),
$R^2$ est un groupe alkylène linéaire ayant 1 ou plus et 20 ou moins atome(s) de carbone.

2. Courroie de presse à sabot selon la revendication 1, dans laquelle la différence absolue entre le nombre d'atomes de carbone contenus dans A et le nombre d'atomes de carbone contenus dans B dans la formule (1) est de 1 ou plus et 8 ou moins.

3. Courroie de presse à sabot selon la revendication 1 ou 2, dans laquelle le nombre d'atomes de carbone de $R^2$ dans A est de 2 ou plus et 11 ou moins, et le nombre d'atomes de carbone de $R^2$ dans B est de 3 ou plus et 19 ou moins.

4. Courroie de presse à sabot selon l'une quelconque des revendications 1 à 3, dans laquelle :

$R^2$ dans A est un groupe n-propylène, et $R^2$ dans B est un groupe n-butylène ; ou

$R^2$ dans A est un groupe n-butylène, et $R^2$ dans B est un groupe n-hexylène ou groupe n-décylène ; ou
$R^2$ dans A est un groupe n-pentylène, et $R^2$ dans B est un groupe n-hexylène ; ou
$R^2$ dans A est un groupe n-hexylène, et $R^2$ dans B est un groupe n-undécylène ou groupe n-dodécylène ; ou
$R^2$ dans A est un groupe n-undécylène, et $R^2$ dans B est un groupe n-dodécylène.

**5.** Courroie de presse à sabot selon l'une quelconque des revendications 1 à 4, dans laquelle le polyisocyanate aliphatique comprend un composé de polyisocyanate alicyclique.

**6.** Courroie de presse à sabot selon l'une quelconque des revendications 1 à 5, dans laquelle le polyisocyanate aliphatique comprend du 1,4-bis(isocyanateméthyl)cyclohexane.

**7.** Courroie de presse à sabot selon l'une quelconque des revendications 1 à 6, comprenant en tant que couche de résine une couche qui constitue une surface circonférentielle externe de la courroie de presse à sabot et comprend la résine de polyuréthane.

**8.** Courroie de presse à sabot selon l'une quelconque des revendications 1 à 7, comprenant en tant que couche de résine une couche qui constitue la surface circonférentielle interne de la courroie de presse à sabot et comprend la résine de polyuréthane.

**9.** Procédé de production d'une courroie de presse à sabot destinée à être utilisée dans une machine pour la fabrication du papier, le procédé comprenant une étape de formation d'une couche de résine en durcissant un prépolymère d'uréthane ayant un groupe isocyanate avec un agent durcissant ayant un groupe hydrogène actif, dans lequel le prépolymère d'uréthane est obtenu en faisant réagir un polyol comprenant un ou plusieurs polycarbonate diol(s) exprimé(s) par la formule suivante (1) :

$$HO\text{-}Am\text{-}B_n\text{-}R^1OH \qquad (1)$$

avec un polyisocyanate aliphatique, dans lequel :
dans la formule (1),

A et B sont chacun différemment une unité exprimée par la formule suivante (2) :

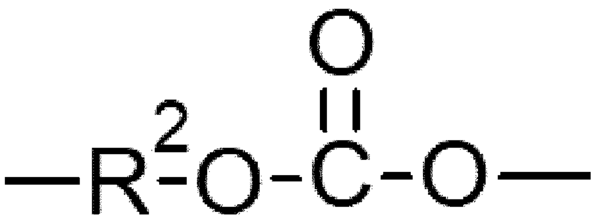

(2)

$R^1$ est un groupe alkylène linéaire, ramifié ou cyclique ayant 1 ou plus et 20 ou moins atome(s) de carbone,
m et n sont chacun indépendamment un entier de 1 à 46, et
dans la formule (2),
$R^2$ est un groupe alkylène linéaire ayant 1 ou plus et 20 ou moins atome(s) de carbone.

FIG. 1

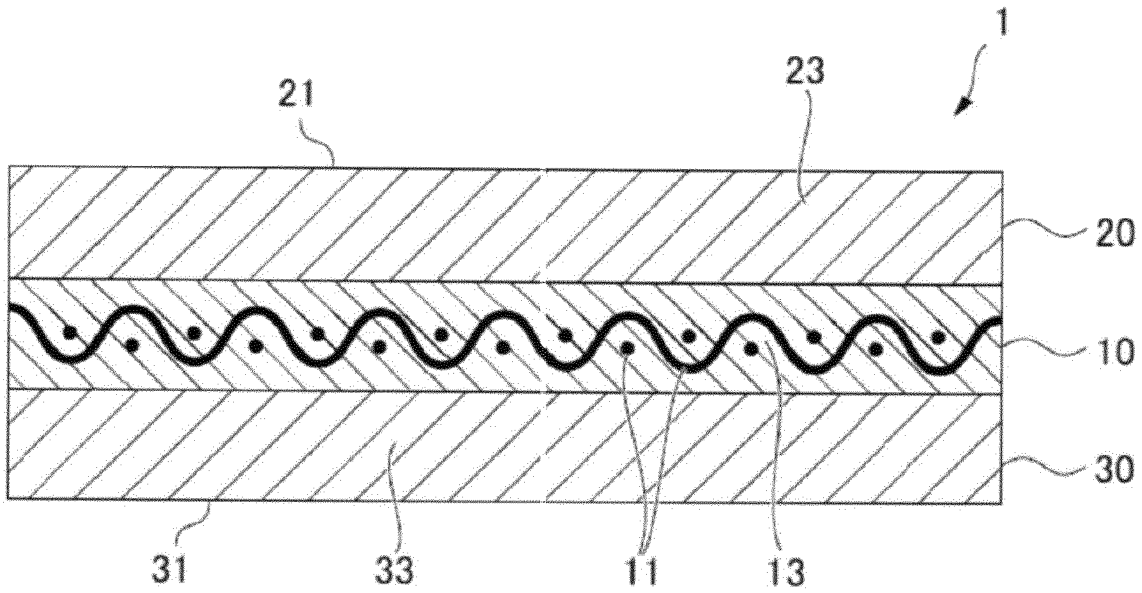

FIG. 2

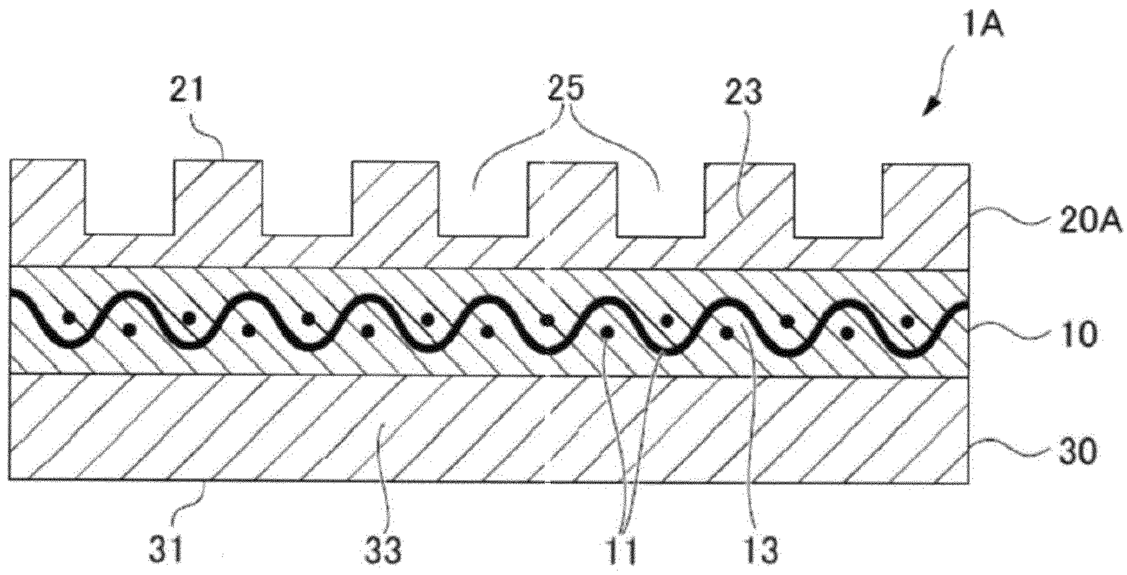

FIG. 3

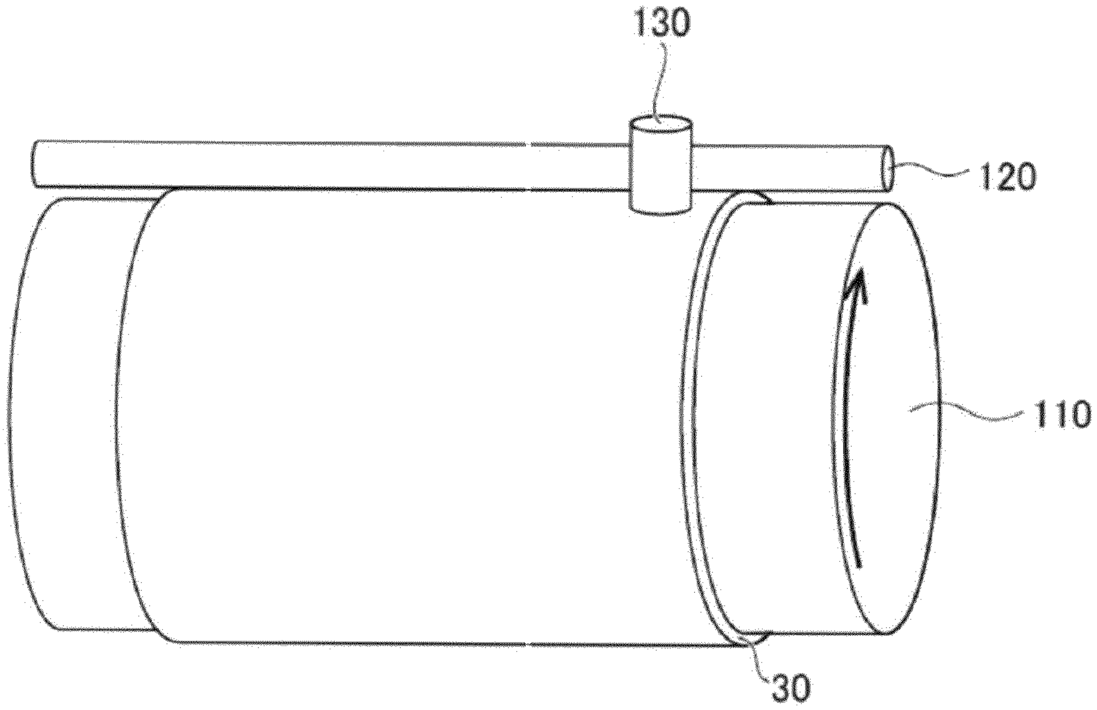

FIG. 4

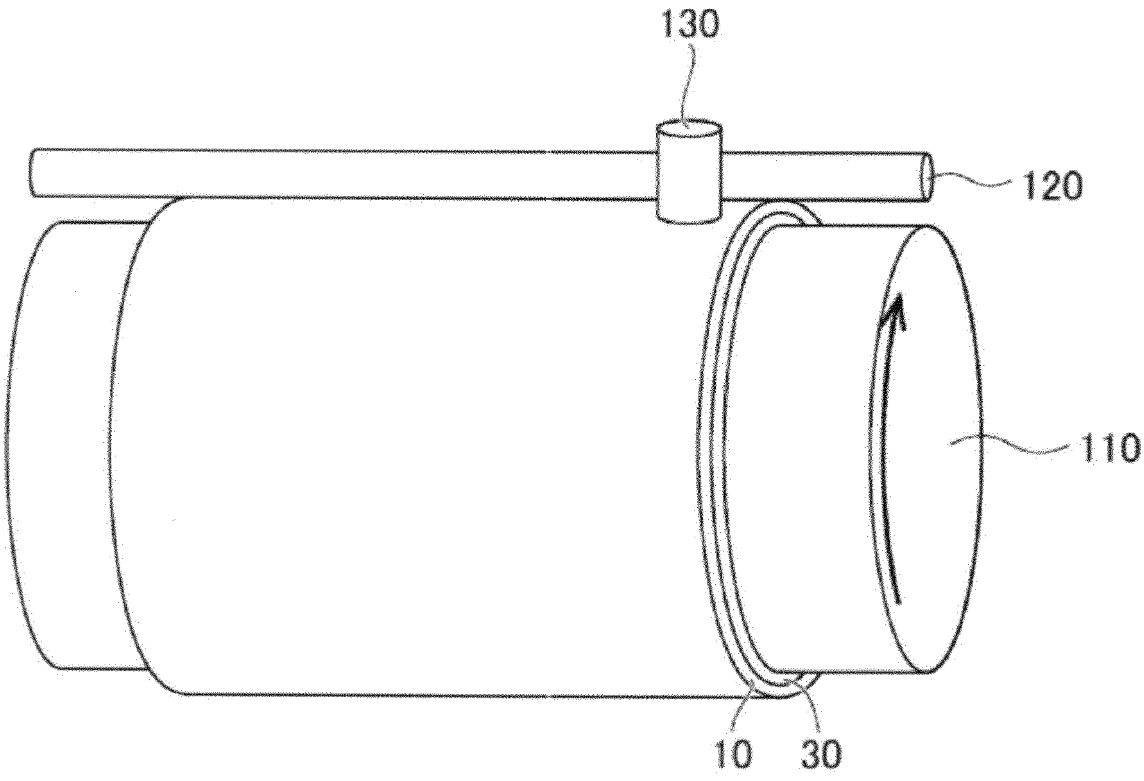

FIG. 5

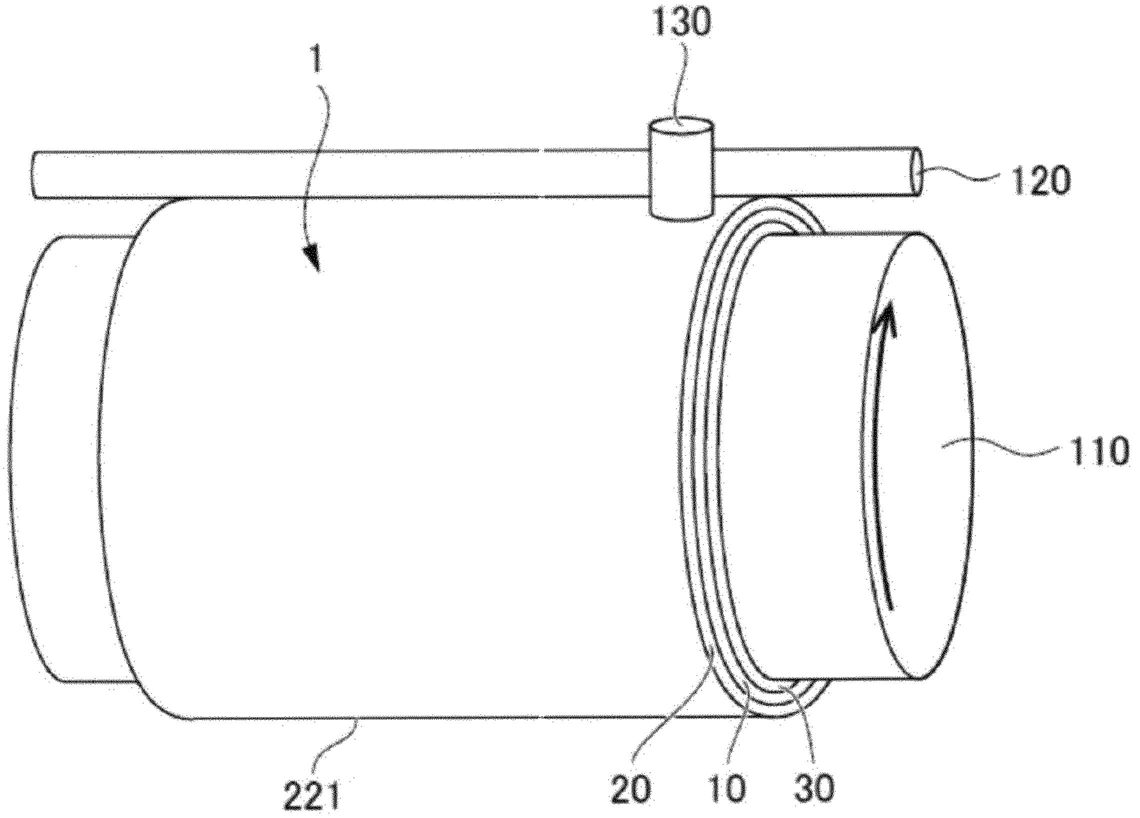

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020033892 A
- JP 2016199813 A
- DE 102011079893